# EUROPÄISCHE PATENTSCHRIFT

(11) **EP 2 945 490 B1**
(45) Veröffentlichungstag und Bekanntmachung des Hinweises auf die Patenterteilung: **10.01.2018**
(21) Anmeldenummer: 13861503.4
(22) Anmeldetag: 13.11.2013
(51) Int. Cl.: A23L 13/40, A23J 3/10, A23J 3/22, A23J 3/14

(54) **VERFAHREN ZUR HERSTELLUNG VON FLEISCHERSATZPRODUKTEN**
METHOD FOR PRODUCING MEAT SUBSTITUTE PRODUCTS
PROCÉDÉ DE FABRICATION DE SUCCÉDANÉS DE VIANDE

(30) Priorität: 21.01.2013 DE 102013000955
(43) Veröffentlichungstag der Anmeldung: 25.11.2015
(73) Patentinhaber: Rovita GmbH, 84549 Engelsberg (DE)
(72) Erfinder: ROSE, Mehran, 85662 Hohenbrunn (DE); GEBHART, Andreas, 84453 Mühldorf am Inn (DE); MOSER, Wolfgang, 84549 Engelsberg (DE)
(74) Vertreter: Feldkamp, Rainer
(86) Internationale Anmeldenummer: PCT/EP2013/003420
(87) Internationale Veröffentlichungsnummer: WO 2014/111103

(56) Entgegenhaltungen:
- EP-A2- 0 225 770
- EP-B1- 1 588 626
- EP-B1- 1 790 233

## Beschreibung

Die Erfindung bezieht sich auf ein Verfahren zur Herstellung von Fleischersatzprodukten der im Oberbegriff des Anspruchs 1 genannten Art.

Aus der EP 0225770 ist ein Fleischersatzprodukt bekannt, das unter Verwendung von säuren- und basenbeständigen Milchproteinen, Natriumalginat, Methylzellulose, Calcium und pflanzlichen Fetten hergestellt werden kann.

Aus der US 3627536 ist ein Verfahren zur Herstellung proteinhaltiger Fasern bekannt, bei dem eine proteinhaltige wässrige Suspension mit einem wasserlöslichen Alginat-Salz gemischt wird und ein Koagulationsmittel graduell zu der Mischung unter Führen hinzugefügt wird, wodurch weiche Fasern gebildet werden, die durch Hinzufügen eines sauren, die Koagulation beschleunigenden Mittels unter fortgesetztem Rühren gehärtet werden, worauf die Mischung aus festen Fasern, des Koagulationsmittels und des Koagulationsbeschleunigungs-mittels erhitzt wird, um den durch Wärme koagulierbaren Proteingehalt der Fasern zu koagulieren. Nachfolgend werden die Fasern mit Wasser gewaschen. Das Koagulationsbeschleunigungsmittel ist bevorzugt eine CalciumchloridLösung oder eine Essigsaure-Lösung. Das Proteinmaterial ist hierbei beispielsweise ein Sojabohnen-Protein, Eiweiß, Milchcasein oder Mischungen hiervon.

Aus der NL-C 108364 ist ein Verfahren zur Herstellung von Fleischersatzprodukten bekannt, bei dem eine homogene Mischung aus nicht-tierischen Proteinen, wie z.B. Soja, Reis, Mais und dergleichen, mit einem Hydrokolloid, das mit Metallkationen ausfällt, und Wasser zu einer homogenen Mischung gebracht wird und diese Mischung oder Emulsion mit einer Lösung eines Metallkations, beispielsweise von Calcium vermischt wird, um ein faserartiges Produkt zu bilden, das dann aus der so gebildeten Mischung abgetrennt wird.

Die Übertragung dieses Verfahrens auf Fleischersatzprodukte auf der Grundlage von Milchproteinen stößt aufgrund des hohen Gehalts von freien Calciumionen vieler Milchproteine auf Probleme, da es bei der Mischung der Proteine mit einem Hydrokolloid, das mit Metallkationen ausfällt, zu einer vorzeitigen Ausfällung kommt, so dass beispielsweise gemäß der EP 1467628 B1 versucht wurde, bei der Mischung aus Milchproteinen und dem Hydrokolloid diese vorzeitige Ausfällung durch Beifügung eines einen Calciumionenkomplex bildenden Mittels zu verhindern, bevor die Mischung mit dem Hydrokolloid erfolgt. Das den Calciumionenkomplex bildende Mittel kann beispielsweise ein Phosphatmaterial sein.

Wie aus der EP 1588626 B1 ersichtlich, kann die Hinzufügung des einen Calciumionenkomplex bildenden Mittels entfallen, wenn das Proteinmaterial ein Milchproteinmaterial umfasst, das beispielsweise ein Milchpulver, Molkenprotein, Alkali-Metall-Caseinat und Ammonium-Caseinat umfasst, da diese Ausgangsmaterialien nur einen geringen Calciumgehalt aufweisen. Hierbei ist weiterhin angegeben, dass die Faserstruktur oder Faserkonsistenz durch Einstellen des pH-Wertes beeinflusst werden kann.

Aus der EP 0174192 A2 ist weiterhin ein Verfahren zur Zubereitung eines Milchproteins bekannt, bei dem eine wässrige Lösung oder Dispersion von Casein und einem Anteil eines sauren Polysaccharids bei engen pH-Werten einer Wärmebehandlung unterworfen wird. Als Polysaccharid wird hierbei beispielsweise Natriumalginat verwendet.

Die EP 0063728 beschreibt ein Verfahren zur Herstellung eines geformten Nahrungsmittelproduktes aus mikrofibrillarem Milcheiweiß, bei dem ein wässriges Gel eines Milcheiweißes das im Wesentlichen Calciumcaseinat enthält, mit einem Entwässerungsmittel und einem Dispergiermittel gemischt und einer Wärmebehandlung unterworfen wird. Hierbei kann der Mischung auch ein Fett oder Öl hinzugefügt werden.

Aus der EP 1 790 233 B1 ist weiterhin ein Verfahren bekannt, bei dem eine Eiweiß und Fett enthaltende Emulsion erhitzt und dabei die Eiweiße denaturiert werden. Gleichzeitig wird ein Dickungsmittel in Form von Alginat und insbesondere Natriumalginat in die Emulsion unter Rühren eingearbeitet und nachfolgend eine Calciumionen bereitstellend Lösung hinzugefügt, beispielsweise Calciumchlorid. Die Zugabe dieses Fällungs- bzw. Koagulationsmittels ermöglicht jedoch keine genaue Steuerung der gewünschten Faserstruktur, da die Koagulation bzw. Fällung sehr abrupt erfolgt.

Allen diesen bekannten Verfahren ist damit gemeinsam, dass die Faserbildung nur schwer zu kontrollieren ist und in vielen Fällen zu einer ungleichförmigen Faserbildung führt.

Der Erfindung liegt die Augabe zugrunde, ein Verfahren der eingangs genannten Art zu schaffen, bei dem kontrollierbare und gleichförmige Faserbildung erreicht werden kann.

Diese Aufgabe wird durch die im Patentanspruch 1 angegebenen Merkmale gelöst.

Vorteilhafte Ausgestaltungen und Weiterbildungen der Erfindung ergeben sich aus den Unteransprüchen.

Die vorliegende Erfindung liefert ein Verfahren zur Bildung von fleischähnlichen Fasern aus Proteinen unter Einschluß von Milchproteinen und pflanzlichen Proteinen zur Herstellung von Fleischersatzprodukten.

Bei einer Ausführungsform des erfindungsgemäßen Verfahren wird eine Emulsion aus Wasser, einem Fett und/oder Öl und einem Milchprotein, vorzugsweise Säurecasein, mit einer geeigneten Kombination aus Hydrokolloiden hergestellt. Die Kombination aus Hydrokolloiden, die mit zweiwertigen Metallkationen ausfallen, wie Pektin oder bevorzugt Natriumalginat, und Hydrokolloiden, die nicht mit zweiwertigen Metallkationen ausfallen wie z.B. Haferfaser, Guarkernmehl, Stärkemehle, bevorzugt jedoch Methylcellulose, ermöglicht eine Steuerung der Faserstruktur und insbesondere deren Festigkeit.

Damit ist das Entfernen/Binden/Komplexieren von Calcium durch Zusatz von komplexbildenden Stoffen bei der vorliegenden Erfindung nicht erforderlich, da ein vorzeitiges Ausfällen der Emulsion bei der Verwendung von Säurecasein, das so gut wie kein Calcium enthält, nicht auftritt.

Bei dem erfindungsgemäßen Verfahren können anstelle des Milchproteins auch oder zusätzlich pflanzliche Proteine wie z.B. Lupineprotein, Erbsenprotein, Kartoffelprotein oder Rapsprotein angewendet werden.

Durch die Zugabe einer kollodialen Protein-Minerallösung bestehend aus micellarem Casein und einer Quelle für zweiwertige Metallkationen wie Calciumchlorid oder einer Mischung von Quellen für zweiwertige Metallkationen wie Calciumchlorid und Calciumcarbonat, entstehen Fasern, die nur noch von der wässrigen Lösung abgetrennt werden müssen.

Der Anteil der zweiwertige Metallkationen bereitstellenden Bestandteile, wie Calciumchlorid oder einer Mischung von zweiwertige Metallkationen bereitstellenden Bestandteilen wie Calciumchlorid und Calciumcarbonat, in der kollodialen Protein-Minerallösung ist hierbei vorzugsweise so gewählt, dass durch diese Bestandteile allein die Faserbildung nicht ausgelöst wird, sondern erst durch die gleichzeitige Zugabe von micellaren Casein, das einen erheblichen Anteil an Calcium hat.

Micellares Casein enthält viel relativ fest gebundenes Calcium, das nur langsam in Lösung geht, so dass die Faserbildung langsam abläuft.

Der Zusatz an kollodial gelöstem micellarem Casein bewirkt in der bereits fertigen Emulsion eine Auflockerung der Bindungsstellen zwischen Säurecasein und Alginat, da nicht alle Bindungsstellen mit reinen Calciumionen (sehr straffe Bindungen) gebunden werden. Da diese Reaktion gleichzeitig mit der Ausfällung mittels Calciumionen stattfindet, hat dies eine deutlich gleichmäßigere Faserbildung zur Folge. Unterstützt wird dieser Prozeß durch den sich einstellenden leicht sauren pH-Wert der Emulsion aufgrund der Verwendung von Säurecaseinat. Dadurch kann die Bildung von Nestern aus nicht ausgefällten Bestandteilen vermieden werden.

Bei Verwendung von Säurecasein in Verbindung mit micellarem Casein zur Ausfällung kann der sonst erforderliche Waschvorgang entfallen, da die Calciumkonzentration gering ist und das micellare Casein eine geschmacksmaskierende Wirkung hat.

Die Faserbildung und die sich ergebende Faserstruktur werden positiv beeinflusst, wenn die Temperatur der Lösung aus zweiwertigen Metallkationen während der Zugabe zu der Emulsion mit 10°C - 60°C deutlich unterhalb der Temperatur der Emulsion liegt.

Es wurde erfindungsgemäß festgestellt, dass eine geeignete Mischung/Kombination von Hydrokolloiden bestehend aus Alginat und Methylcellulose sowie die Variation der Konzentration an zweiwertigen Metallkationen sehr positive Faserstrukturen ergibt und die Ausbeute positiv beeinflusst.

Es wurde weiterhin erfindungsgemäß festgestellt, dass die Faserstruktur durch die Konzentration der Hydrokolloide, bevorzugt Methylcellulose, in der Emulsion und der zum Ausfallen notwendigen zweiwertigen Metallkationen beeinflusst werden kann.

Eine Erhöhung der Konzentration an Hydrokolloiden, bevorzugt Methylcellulose, in der Emulsion bewirkt eine Erhöhung der Ausbeute und ergibt weichere Fasern, ähnlich Hähnchen- oder Fischfleisch.

Festere Fasern ähnlich Rindfleisch werden durch Reduktion der Konzentration an Hydrokolloiden, bevorzugt Methylcellulose, sowie durch Erhöhung der Konzentration an micellarem Kasein und/oder zweiwertigen Metallkationen, bevorzugt Calciumchlorid und Calciumcarbonat, erzielt.

Durch die vorliegende Erfindung können vegetarische, fleischähnliche Fasern aus Säure-Casein ohne Zusatz von einen Calciumkomplex bildenden Stoffen hergestellt werden. Dabei entspricht die Faser der Struktur und Festigkeit von Fleisch.

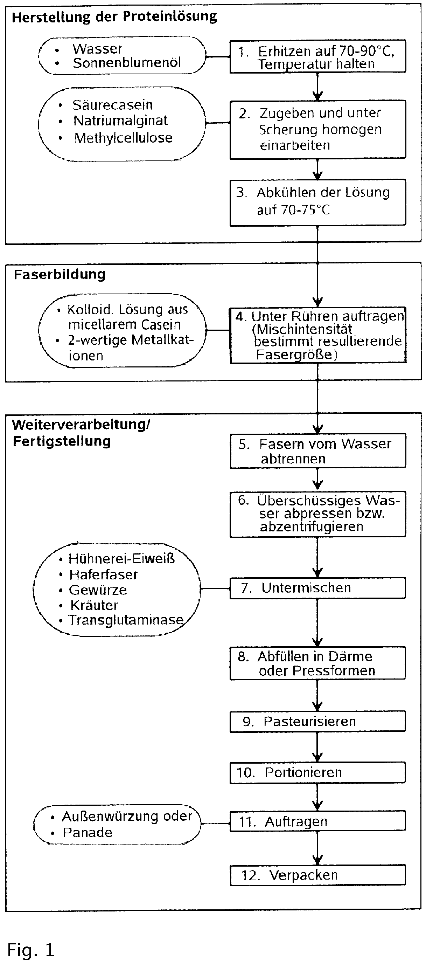

Die Erfindung wird nachfolgend an Hand einer in der Zeichnung dargestellten Ausführungsform eines Verfahrensablaufs noch näher erläutert.

In der Zeichnung ist der Ablauf eines Ausführungsbeispiels des erfindungsgemäßen Verfahrens dargestellt.

### Erstes Beispiel:

- Schritt 1:: Unter Rühren werden 400 - 450 ml Wasser bei 70 - 90°C und 35 -50 ml eines tierischen oder pflanzlichen Fettes oder Öls gemischt.
- Schritt 2:: 25 - 40 g Säurecasein, 10 -20 g Natriumalginat und 1 - 2,5 g Methyl-cellulose werden zugeben und die so gebildete Masse wird unter Scherung zu einer stabil emulgierten Emulsion verarbeitet.
- Schritt 3:: Die Masse gegebenenfalls wird auf ca. 70 - 75 °C abgekühlt.
- Schritt 4:: Unter Rühren wird auf diese Masse eine kollodialen Lösung aus 80 - 100 ml Wasser mit einer deutlich unter der Temperatur der Masse liegenden Temperatur, wie z.B. 10 - 30 °C, sowie 2,4 - 4g Calcium-chlorid und 5 - 8 g micellarem Casein aufgetragen. Es beginnt eine gleichmäßige Faserbildung, wobei die die resultierende Fasergröße durch die Intensität des Mischvorganges beeinflussbar ist.
- Schritt 5:: Nach der Faserbildung werden dies vom Wasser abgetrennt und weiter verarbeitet. Ein Waschvorgang ist nicht erforderlich.
- Schritt 6:: Überschüssiges Wasser wird abgepresst bzw. abzentrifugiert.

In den nachfolgenden Schritten können die so gebildeten Fasern weiter behandelt werden. Zur Weiterbehandlung können die Fasern mit Hühnerei-Eiweiß, Haferfaser, Salz, Gewürzen und Kräutern vermengt werden oder die Fasern werden in Formen gepresst oder in Därme gefüllt und pasteurisiert. Weiterhin kann das Produkt portioniert, eine Außenwürzung aufgebracht oder paniert werden und anschließend verpackt werden.

Als Fett kann Butterfett oder Sonnenblumenöl oder jedes andere tierische oder pflanzliche Fett/Öl verwendet werden. Das Protein kann ein Milchprotein, wie Säurecasein (90 % Proteingehalt, 0,1% Calciumgehalt, Wassergehalt 10 %) sein. Anstelle von Methylcellulose können auch beispielsweise Haferfasern oder Stärkemehle verwendet werden.

### Zweites Beispiel:

Das Protein nach dem ersten Beispiel wird durch pflanzliche Proteine, wie z.B. Sojaprotein, Lupineprotein, Erbsenprotein, Kartoffelprotein oder Rapsprotein ersetzt und verläuft ansonsten wie das Verfahren nach dem ersten Beispiel.

Durch die Hinzufügung der Methylcellulose zu der Emulsion wird eine bessere Steuerung der Faserstruktur ermöglicht.

Die Faserbildung und die sich ergebende Faserstruktur werden weiterhin positiv beeinflusst, wenn die Temperatur der Lösung aus zweiwertigen Metallkationen während der Zugabe zu der Emulsion mit 10 - 60 °C deutlich unterhalb der Temperatur der Emulsion liegt.

Eine geeignete Mischung/Kombination von Hydrokolloiden bestehend aus Alginat und Methylcellulose sowie die Variation der Konzentration an zweiwertigen Metallkationen ermöglicht in Abhängigkeit von den Ausgangsmaterialien sehr positive Faserstrukturen und beeinflusst die Ausbeute positiv. Eine Erhöhung der Konzentration an Methylcellulose in der Emulsion bewirkt eine Erhöhung der Faserausbeute und ergibt somit weichere Fasern, ähnlich Hähnchen- oder Fischfleisch, während eine Reduktion der Konzentration an Methylcellulose in der Emulsion und eine Erhöhung der zweiwertigen Metallkationen in der Lösung festere Fasern ähnlich Rindfleisch bewirkt.

Das erfindungsgemäße Verfahren ermöglicht es, fleischlose Produkte in allen Formaten wie Hamburger, Schnitzel, Bällchen, Wurst und Bratwurst zum Kochen, Aufwärmen, Braten oder Grillen herzustellen.

Weiterhin können Hamburger-Produkte, marinierte oder nicht marinierte, in Form gepresste Fasern, die als Fleischersatz in Fertigpackung oder einzeln angeboten gebraten oder gegrillt werden können, Schnitzel, marinierte, panierte oder gewürzte, in Form gepresste Fasern, die als Fleischersatz in z.B. Fertigpackung oder einzeln angeboten gebraten oder gegrillt werden können, hergestellt weden. Auch Füllungen mit z.B. Käse. Bällchen, Streifen oder Würfel sind möglich. In Form gepresste Fasern, die als Bestandteil von Fertigmenüs oder einzeln als Hackfleisch, Geschnetzeltes oder Gulaschwürfel, Wurst und Bratwurst sind denkbar. Fein zerkleinerte Fasern, die - in Därme gefüllt - als vegetarische Wurst als Bestandteil von Fertigmenüs oder einzeln Anwendung finden können.

Die Erfindung ermöglicht damit die Entwicklung von Fertigprodukten mit neuartiger Textur und Form mit und ohne Füllung. Außerdem ermöglicht die Erfindung eine Senkung der Produktionskosten.

Die Ausgangsstoffe des Verfahrens können in Pulver- oder Granulatform bereitgestellt werden, so dass am Anwendungsort lediglich die Hinzufügung von Wasser erforderlich ist.

## Patentansprüche

1. Verfahren zur Herstellung von Fleischersatzprodukten, bei dem eine Mischung aus Wasser und einem pflanzlichen Fett oder Öl mit einem Protein, Natriumalginat und Methylcellulose unter Scherung zu einer stabilen Emulsion verarbeitet und der Emulsion eine kollodiale Lösung aus zweiwertigen Metallkationen und micellarem Casein zur Einleitung einer Faserbildung hinzugefügt wird, wobei zur Kontrolle der Reaktionsgeschwindigkeit die Menge der hinzugefügten zweiwertigen Metallkationen nicht zur Einleitung einer Faserbildung ausreicht, sondern so gewählt ist, dass sie erst in Kombination mit dem Calcium-Anteil des micellaren Caseins zur Einleitung der Faserbildung führt.

2. Verfahren nach Anspruch 1, **dadurch gekennzeichnet, dass** das Protein durch Säurecasein gebildet ist.

3. Verfahren nach Anspruch 1, **dadurch gekennzeichnet, dass** das Protein durch pflanzliche Proteine, wie z.B. Lupinenprotein, Erbsenprotein, Kartoffelprotein oder Rapsprotein gebildet ist.

4. Verfahren nach einem der Ansprüche 1 bis 3, **dadurch gekennzeichnet, dass** die Faserstruktur durch die Konzentration der Hydrokolloide in der Emulsion und der zum Ausfällen notwendigen zweiwertigen Metallkationen und des micellaren Caseins gesteuert wird.

5. Verfahren nach einem der vorhergehenden Ansprüche, **dadurch gekennzeichnet, dass** die Quelle für die zweiwertigen Metallkationen Calciumchlorid und/oder Calciumcarbonat ist.

6. Verfahren nach einem der vorhergehenden Ansprüche, **dadurch gekennzeichnet, dass** die Mischung aus Wasser und einem pflanzlichen Öl auf eine Temperatur von 70°C bis 90°C erwärmt wird.

7. Verfahren nach einem der vorhergehenden Ansprüche, **dadurch gekennzeichnet, dass** die Temperatur der kollodialen Lösung aus zweiwertigen Metallkationen und micellarem Casein vor der Zugabe auf 10°C bis 60°C gehalten wird.

8. Verfahren nach einem der vorhergehenden Ansprüche, **dadurch gekennzeichnet, dass** die Faserausbeute durch Erhöhung der Konzentration an Methylcellulose zu der Emulsion erhöht wird.

9. Verfahren nach Anspruch 8, **dadurch gekennzeichnet, dass** durch eine Erhöhung der Konzentration der Methylcellulose in der Emulsion eine Verringerung der Festigkeit der Fasern ergibt.

10. Verfahren nach einem der vorhergehenden Ansprüche, **dadurch gekennzeichnet, dass** durch eine Verringerung der Konzentration an Methylcellulose in der Emulsion und/oder eine Erhöhung der Konzentration an micellarem Casein und /oder der zweiwertigen Metallkationen eine Vergrößerung der Festigkeit der Fasern bewirkt wird.

## Claims

1. A method for producing meat substitute products in which a mixture of water and a vegetable fat or oil with a protein, sodium alginate and methylcellulose is processed by shearing to form a stable emulsion and a colloidal solution of divalent metal cations and micellar casein is added to the emulsion to initiate fibre formation, wherein in order to monitor the reaction rate, the quantity of added divalent metal cations is not sufficient to initiate fibre formation but is selected so that it only leads to the initiation of fibre formation in combination with the calcium fraction of the micellar casein.

2. The method according to claim 1, **characterized in that** the protein is formed by acid casein.

3. The method according to claim 1, **characterized in that** the protein is formed by vegetable proteins such as, for example, lupine protein, pea protein, potato protein or rape protein.

4. The method according to any one of claims 1 to 3, **characterized in that** the fibre structure is controlled by the concentration of the hydrocolloids in the emulsion and the divalent metal cations required for the precipitation and the micellar casein.

5. The method according to any one of the preceding claims, **characterized in that** the source for the divalent metal cations is calcium chloride and/or calcium carbonate.

6. The method according to any one of the preceding claims, **characterized in that** the mixture of water and a vegetable oil is heated to a temperature of 70°C to 90°C.

7. The method according to any one of the preceding claims, **characterized in that** the temperature of the colloidal solution of divalent metal cations and micellar casein is held at 10°C to 60 °C before addition.

8. The method according to any one of the preceding claims, **characterized in that** the fibre yield is increased by increasing the concentration of methylcellulose to the emulsion.

9. The method according to claim 8, **characterized in that** a reduction in the strength of the fibres is brought about by an increase in the concentration of methyl cellulose in the emulsion.

10. The method according to any one of the preceding claims, **characterized in that** an increase in the strength of the fibres is brought about by a reduction in the concentration of methylcellulose in the emulsion and/or an increase in the concentration of micellar casein and/or the divalent metal cations.

## Revendications

1. Procédé destiné à fabriquer des succédanés de viande, lors duquel on met en oeuvre un mélange d'eau et d'une graisse ou huile végétale avec une protéine, de l'alginate de sodium et une méthylcellulose, sous cisaillement, en une émulsion stable et on ajoute à l'émulsion une solution colloïdale de cations métalliques bivalents et de caséine micellaire pour initier une formation de fibres, pour le contrôle de la vitesse de réaction, la quantité des cations métalliques bivalents ajoutés ne suffisant pas pour initier une formation de fibres, mais étant choisie de telle sorte qu'elle ne produise l'initiation de la formation de fibres qu'une fois associée avec la part de calcium de la caséine micellaire.

2. Procédé selon la revendication 1, **caractérisé en ce que** la protéine est formée de caséine acide.

3. Procédé selon la revendication 1, **caractérisé en ce que** la protéine est formée de protéines végétales, comme par ex. de protéine de lupin, de protéine de pois, de protéine de pommes de terre ou de protéine de colza.

4. Procédé selon l'une quelconque des revendications 1 à 3, **caractérisé en ce que** la structure des fibres est commandée par la concentration des hydrocolloïdes dans l'émulsion et des cations métalliques bivalents nécessaires pour la précipitation et de la caséine micellaire.

5. Procédé selon l'une quelconque des revendications précédentes, **caractérisé en ce que** la source pour les cations métalliques bivalents est du chlorure de calcium et/ou du carbonate de calcium.

6. Procédé selon l'une quelconque des revendications précédentes, **caractérisé en ce qu'**on chauffe le mélange d'eau et d'huile végétale à une température de 70°C à 90°C.

7. Procédé selon l'une quelconque des revendications précédentes, **caractérisé en ce qu'**on maintient la température de la solution colloïdale de cations métalliques bivalents et de caséine micellaire avant l'ajout à de 10°C à 60°C.

8. Procédé selon l'une quelconque des revendications précédentes, **caractérisé en ce que** qu'on augmente le rendement de fibres par élévation de la concentration de méthylcellulose dans l'émulsion.

9. Procédé selon la revendication 8, **caractérisé en ce que** par une élévation de la concentration de méthylcellulose dans l'émulsion, on obtient une réduction de la fermeté des fibres.

10. Procédé selon l'une quelconque des revendications précédentes, **caractérisé en ce que** par une élévation de la concentration de méthylcellulose dans l'émulsion et/ou par une élévation de la concentration de caséine micellaire et/ou des cations métalliques bivalents, on provoque une augmentation de la fermeté des fibres.
